# EUROPÄISCHE PATENTSCHRIFT

(11) **EP 1 772 343 B1**
(45) Veröffentlichungstag und Bekanntmachung des Hinweises auf die Patenterteilung: **27.02.2008**
(21) Anmeldenummer: 06019909.8
(22) Anmeldetag: 22.09.2006
(51) Int. Cl.: B62B 5/04, B60T 1/04, A61G 5/10

(54) **Feststellbremse, insbesondere für einen Rollstuhl**
Parking brake, especially for a wheelchair
Frein de stationnement, notamment pour un fauteuil roulant

(30) Priorität: 07.10.2005 DE 102005048671
(43) Veröffentlichungstag der Anmeldung: 11.04.2007
(73) Patentinhaber: Otto Bock HealthCare IP GmbH & Co. KG, 37115 Duderstadt (DE)
(72) Erfinder: Müller, Alexander, 74889 Sinsheim Weiler (DE)
(74) Vertreter: Rehmann, Thorsten

(56) Entgegenhaltungen:
- EP-A- 0 204 040
- DE-U1- 9 309 593
- DE-U1- 9 405 091

## Beschreibung

Die Erfindung betrifft eine Feststellbremse, insbesondere für einen Rollstuhl, mit einem über einen Schwenkhebel an einem Halteteil angelenkten Andrückelement, das durch Verschwenken eines Handbremshebels in eine Feststellposition verschwenkbar ist, in der das Andrückelement an einem Reifen kraftbeaufschlagt anliegt, und ein eine Rückstellkraft aufbringendes Element unter Vorspannung gesetzt wird.

Eine solche Feststellbremse ist beispielsweise aus der DE 93 09 593 U1 oder der DE 94 05 091 U1 bekannt.

Im Behindertensport werden in der Regel Sportrollstühle verwendet, die sich von Alltagsrollstühlen dadurch unterscheiden, dass sie eine starre Rahmenkonstruktion aufweisen und keine Feststellbremse besitzen, da diese beim Mannschaftssport eine Verletzungsgefahr für Mitspieler darstellen kann. Vielfach besteht jedoch der Wunsch, den Sportrollstuhl wegen seiner Stabilität auch im Alltagsbereich einzusetzen. Diesem Wunsch wird durch die bekannte Kniehebel-Feststellbremse entsprochen, die beim Sport mit einem Handgriff nach innen eingeschwenkt werden kann und somit eine Verletzungsgefahr ausschließt oder einfach vom Rollstuhlrahmen abgenommen werden kann.

Als die Rückstellkraft aufbringende Elemente sind Federn oder Gummiringe bekannt, die beim Verschwenken der Hebel gespannt werden und den Schwenkhebel beim Lösen der Bremse in seine Ruheposition zwingen. Die Federn oder Gummiringe müssen relativ aufwendig befestigt und gelagert werden, wodurch der Aufbau der Bremse teilweise kompliziert ist.

Von dieser Problemstellung ausgehend, soll die eingangs erläuterte Feststellbremse vereinfacht werden.

Zur Problemlösung zeichnet sich eine gattungsgemäße Feststellbremse dadurch aus, dass das die Rückstellkraft aufbringende Element durch einen elastisch verbiegbaren Teil eines am Halteteil befestigbaren Gehäusedeckels gebildet wird. Durch diese Ausgestaltung wird der Aufbau der Bremse vereinfacht, da weniger Bauteile benötigt werden, was die Montagezeit und die Lagerhaltung reduziert, wodurch kostengünstig produziert werden kann. Der Gehäusedeckel deckt die Hebel der Feststellbremse ab, und beseitigt die Einklemmgefahr der Hände bzw. Finger des Rollstuhlfahrers.

Vorzugsweise liegt das elastisch verbiegbare Teil des Gehäusedeckels an dem Schwenkhebel an.

Wenn der Gehäusedeckel aus Kunststoff besteht, kann das verbiegbare Teil einfach angespritzt werden. Wird der Schwenkhebel so verschwenkt, dass das Andrückelement in Richtung des Reifens verlagert wird, wird der verbiegbare Teil angehoben und aus seiner ursprünglichen Lage rausgebogen.

Vorzugsweise ist der Gehäusedeckel mittels der Schrauben am Halteteil befestigt, die die Schwenkachsen des Handbremshebels und des Schwenkhebels bilden. Dadurch wird der Aufbau der Feststellbremse weiter vereinfacht.

Um die Feststellbremse einfach am Rollstuhl befestigen zu können, ist das Halteteil in einer an einem Rahmenrohr anklemmbaren Schelle vorzugsweise kraft- und formschlüssig fixiert.

Mit Hilfe einer Zeichnung soll ein Ausführungsbeispiel der erfindungsgemäßen Feststellbremse nachfolgend näher erläutert werden.

Es zeigt:
- Figur 1: einen Rollstuhl in Seitenansicht mit gelöster Feststellbremse;
- Figur 2: den Rollstuhl nach Figur 1 mit angezogener Feststellbremse;
- Figur 3: den Rollstuhl nach Figur 1 ohne Gehäusedeckel;
- Figur 4: den Rollstuhl nach Figur 2 ohne Gehäusedeckel;

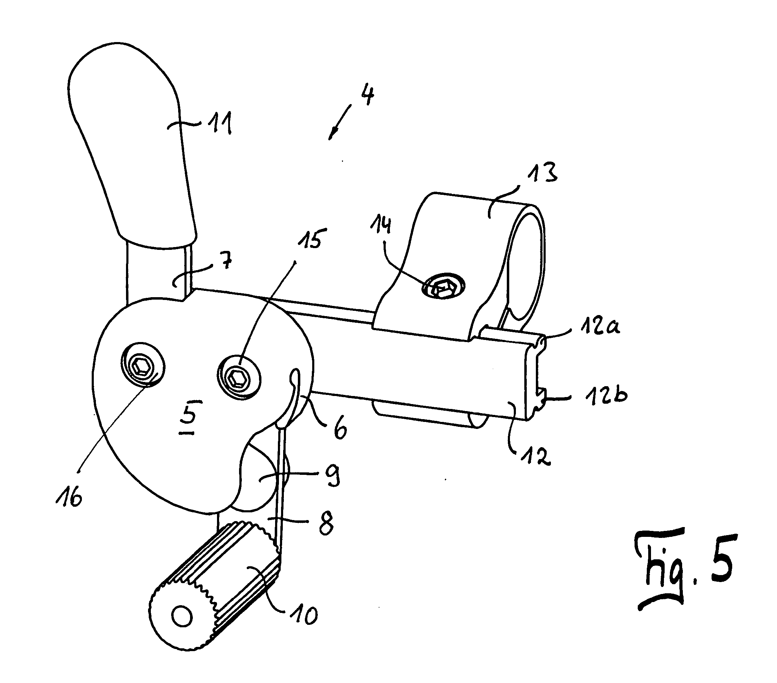

- Figur 5: eine perspektivische Ansicht der Feststellbremse in gelöster Stellung;
- Figur 6: die Draufsicht auf die Feststellbremse nach Figur 5;

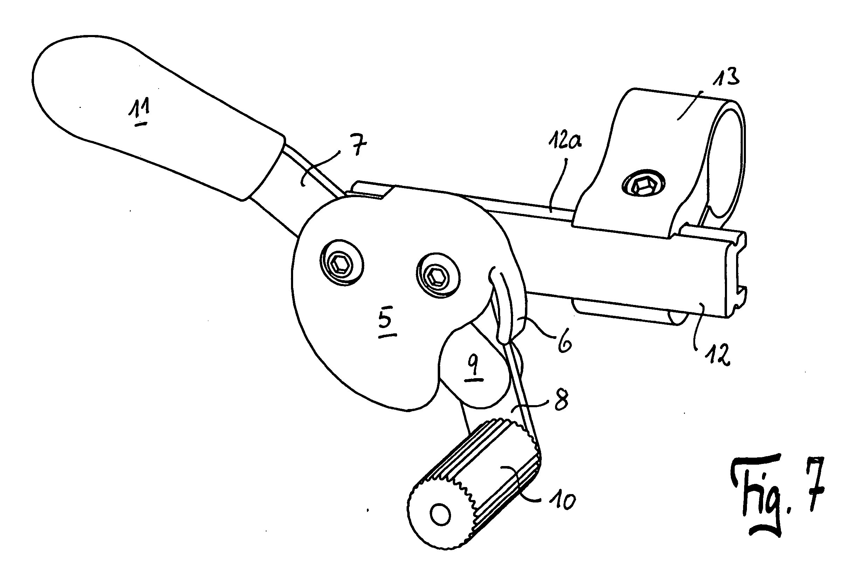

- Figur 7: die Feststellbremse nach Figur 5 in Feststellposition;
- Figur 8: die Draufsicht auf die Feststellbremse nach Figur 7;

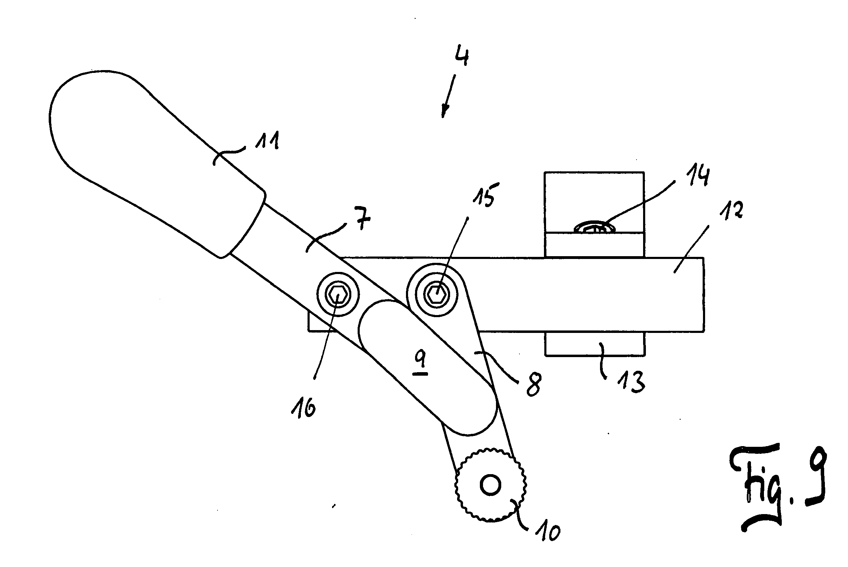

- Figur 9: die Feststellbremse nach Figur 6 ohne Gehäusedeckel;
- Figur 10: die Explosionsdarstellung der Feststellbremse.

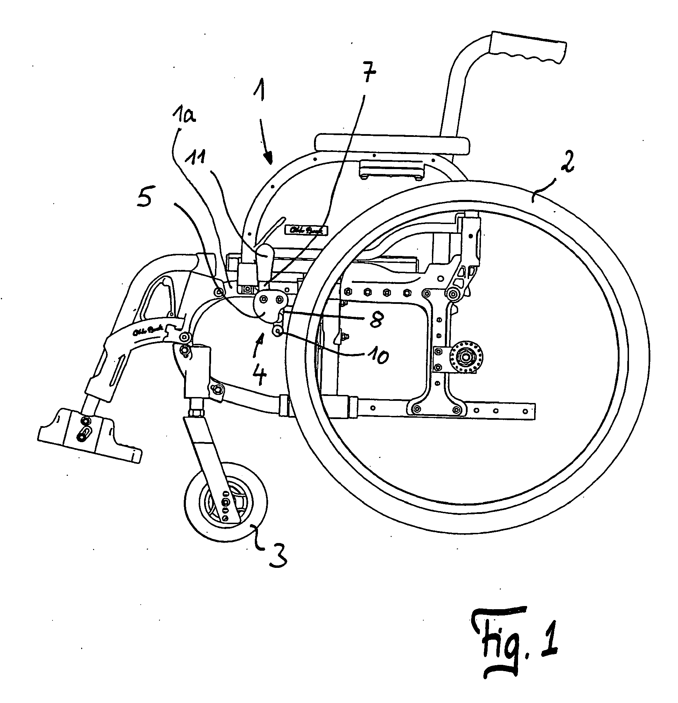

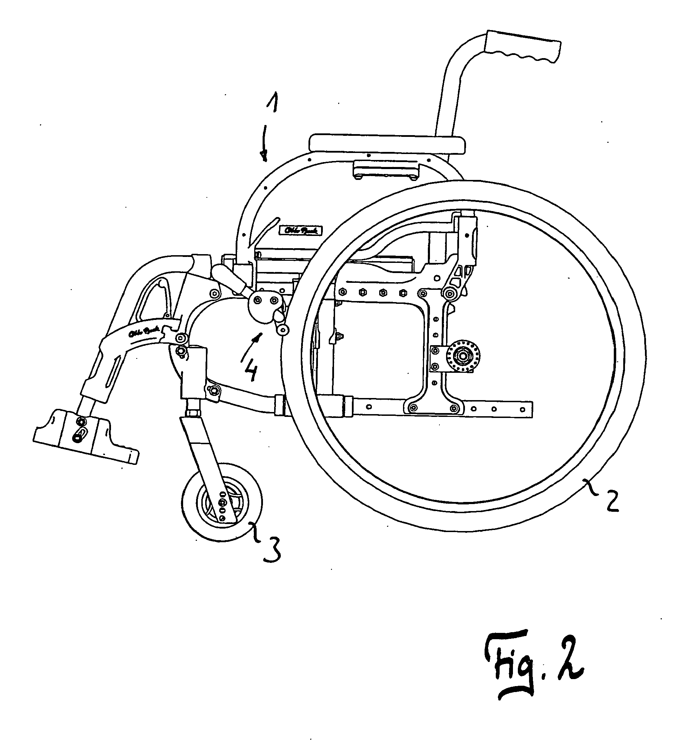

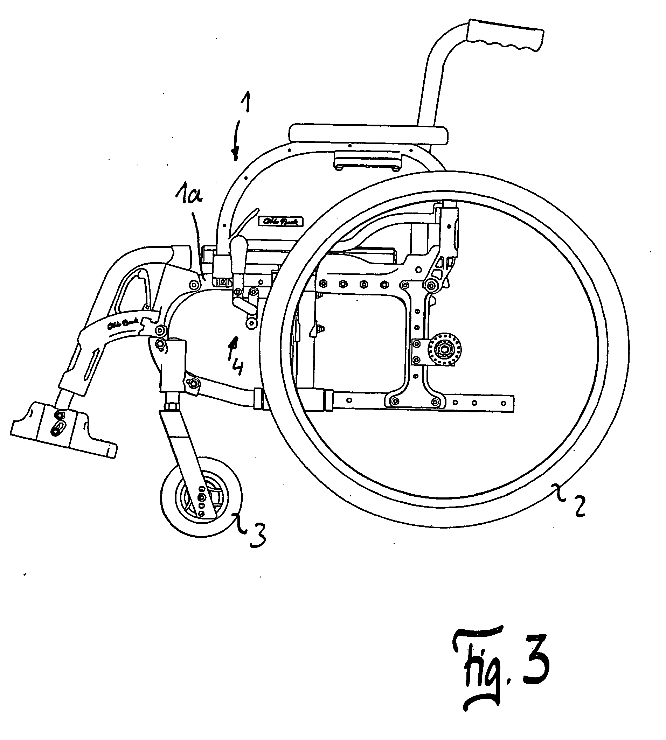

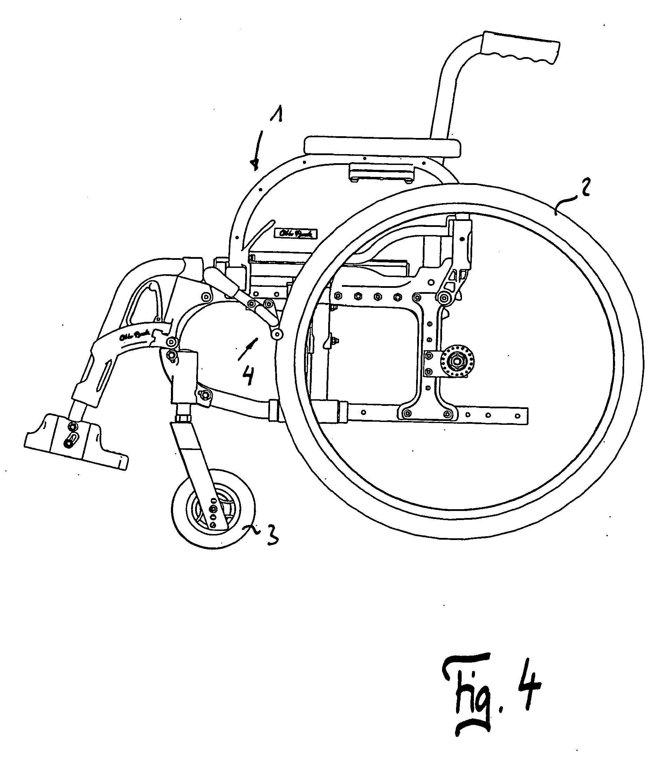

Wie die Figuren 1 - 4 zeigen, weist der Rollstuhl einen aus verschiedenen Rohren bestehenden Rahmen 1 auf, an dem zwei Hinterräder 2 und zwei lenkbare Vorderräder 3 angeordnet sind. An einem Rahmenrohr 1 a ist die Feststellbremse 4 angeklemmt.

Die Feststellbremse 4 besteht im Wesentlichen aus dem Halteteil 12, an dem über eine Schraube 16 ein Handbremshebel schwenkbar befestigt ist, und dem an seinem freien Ende mit einem Andrückelement 10 versehenen Schwenkhebel 8, der über eine Schraube 15 am Halteteil 12 schwenkbar befestigt ist sowie dem Koppelhebel 9, der den Handbremshebel 7 und den Schwenkhebel 8 gelenkig miteinander verbindet. Damit vermieden wird, dass der Benutzer des Rollstuhls sich beim Bedienen der Feststellbremse klemmt und aus optischen Gründen ist ein die Hebel 7, 8, 9 teilweise abdeckender Gehäusedeckel 5 vorgesehen, der ebenfalls über die die Schwenkachsen der Hebel 7 und 8 bildenden Schrauben 15, 16 mit dem Halteteil 12 verschraubt ist.

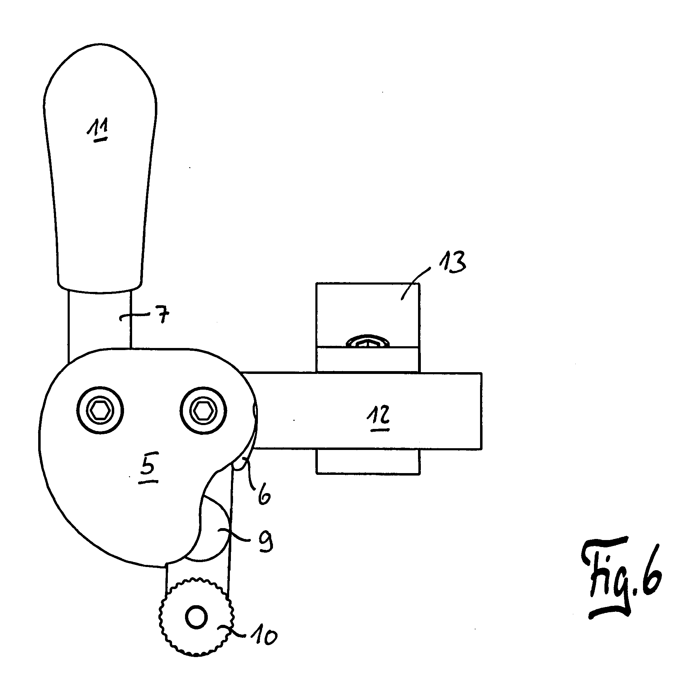

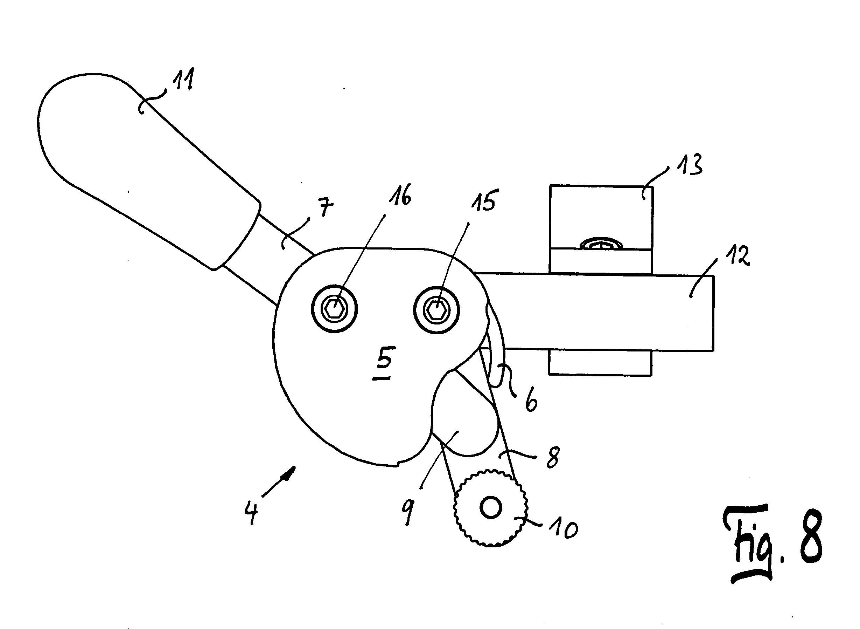

In seinem vom Handgriff 11 des Handbremshebels 7 entfernt liegenden Bereich ist an den aus Kunststoff bestehenden Gehäusedeckel 5 ein elastisch verbiegbares Teil 6 angespritzt, das an dem Schwenkhebel 8 anliegt (vgl. Figuren 6 und 8). Wird der Handbremshebel 7 aus seiner in Figur 6 dargestellten Ruheposition in die in Figur 8 dargestellte Feststell-Position verschwenkt, drückt der Schwenkhebel 8 das Teil 6 nach außen, wodurch sich dieses elastisch verbiegt und eine Rückstellkraft auf den Schwenkhebel 8 ausübt, die beim Lösen der Feststellbremse 4 den Schwenkhebel 8 und den Handbremshebel 7 in die Ruheposition zurückschwenkt.

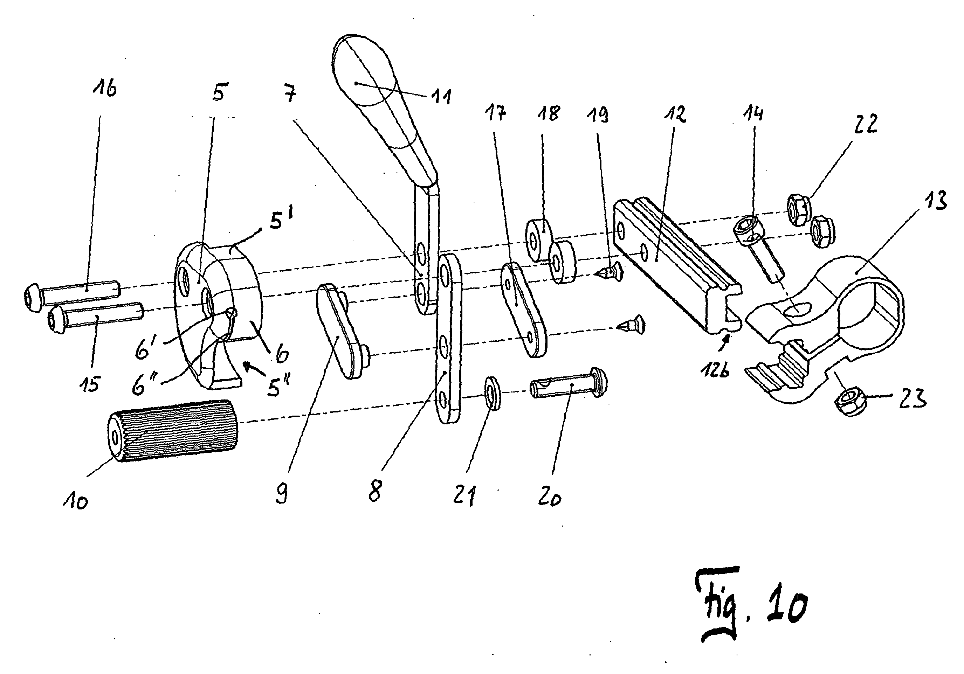

Figur 10 lässt den Aufbau der Feststellbremse deutlich erkennen. Der Gehäusedeckel 5 ist mit einem axial hervorstehenden Rand 5' versehen, der eine Ausnehmung 5" für den Schwenkhebel 8 und den Koppelhebel 9 aufweist. Das elastische Teil 6 bildet den zur Ausnehmung 5" führenden Endbereich des Randes 5'. Die Elastizität wird durch eine Spannungsspitzen verhindernde Bohrung 6' und den Schlitz 6" erreicht.

Der Koppelhebel 9 ist mit zwei äußeren Ansätzen versehen, die durch hier nicht näher bezeichnete Bohrungen im Handbremshebel 7 und dem Schwenkhebel 8 hindurchgeführt und mit einer Platte 17 als Gegenlager verschraubt sind.

Das Halteteil 12 ist über eine schwalbenschwanzähnliche Führung 12a, 12b in der Schelle 13 fixiert, die am Rahmenrohr 1a anklemmbar ist. Das schwalbenschwanzförmige Profil 12a, 12b des Halteteils 12 findet eine entsprechende Ausbildung in den beiden Schenkeln der Schelle 13. Über die Schraube 14 wird die Klemme 13 zugezogen. Die Klemmung erfolgt dabei sowohl am Rahmenrohr 1 a als auch am Halteteil 12. Das Halteteil 12 ist über einen gewissen Bereich in der Schelle 13 verschiebbar, so dass die Feststellbremse an unterschiedliche Rollstühle angepasst werden kann.

### Bezugszeichenliste:

- 1: Rahmen
- 2: Hinterrad
- 3: Vorderrad
- 4: Feststellbremse
- 5: Gehäusedeckel
- 5': Rand
- 5": Ausnehmung
- 6: elastisch verbiegbares Teil
- 6': Bohrung
- 6": Schlitz
- 7: Handbremshebel
- 8: Schwenkhebel
- 9: Koppelhebel
- 10: Andrückelement
- 11: Handgriff
- 12: Halteteil
- 12a: Schwalbenschwanz
- 12b: Schwalbenschwanz
- 13: Schelle
- 14: Schraube
- 15: Schraube
- 16: Schraube
- 17: Platte
- 18: Scheibe
- 19: Schraube
- 20: Schraube
- 21: Scheibe
- 22: Mutter
- 23: Mutter
Re/dg

## Patentansprüche

1. Feststellbremse, insbesondere für einen Rollstuhl mit einem über einen Schwenkhebel (8) an einem Halteteil (12) angelenkten Andrückelement (10), das durch Verschwenken eines Handbremshebels (7) in eine FeststellPosition verschwenkbar ist, in der das Andrückelement (10) an einem Reifen (2) kraftbeaufschlagt anliegt, und ein eine Rückstellkraft aufbringendes Element unter Vorspannung gesetzt wird, **dadurch gekennzeichnet, dass** das die Rückstellkraft aufbringende Element durch ein elastisch verbiegbares Teil (6) eines am Halteteil (12) befestigbaren Gehäusedeckels (5) gebildet wird.

2. Feststellbremse nach Anspruch 1, **dadurch gekennzeichnet, dass** das elastisch verbiegbare Teil (6) an dem Schwenkhebel (8) anliegt.

3. Feststellbremse nach Anspruch 1 oder 2, **dadurch gekennzeichnet, dass** der Gehäusedeckel (5) aus Kunststoff besteht und das verbiegbare Teil (6) angespritzt ist.

4. Feststellbremse nach einem oder mehreren der vorstehenden Ansprüche, **dadurch gekennzeichnet, dass** der Gehäusedeckel (5) mittels Schrauben (15, 16) am Halteteil befestigt ist und die Schrauben (15, 16), die Schwenkachsen des Handbremshebels (7) und des Schwenkhebels. (8) bilden.

5. Feststellbremse nach einem oder mehreren der vorstehenden Ansprüche, **dadurch gekennzeichnet, dass** das Halteteil (12) in einer an einem Rahmenrohr (1a) anklemmbaren Schelle (13).fixiert ist.

6. Feststellbremse nach Anspruch 5, **dadurch gekennzeichnet, dass** die Fixierung durch Kraft- und Formschluss erfolgt.

## Claims

1. A parking brake, particularly for a wheelchair, with a press-on element (10) which is coupled to a retaining part (12) via a pivot lever (8) and can be pivoted by pivoting of a handbrake lever (7) into a fixing position in which the press-on element (10) bears against a tyre (2) in a manner exerting force, and an element which applies a restoring force is placed under pre-stress, **characterized in that** the element applying the restoring force is formed by an elastically bendable part (6) of a housing cover (5) which can be fastened to the retaining part (12).

2. A parking brake according to claim 1, **characterized in that** the elastically bendable part (6) bears against the pivot lever (8).

3. A parking brake according to claim 1 or 2, **characterized in that** the housing cover (5) comprises plastic and the bendable part (6) is injection moulded on.

4. A parking brake according to one or more of the preceding claims, **characterized in that** the housing cover (5) is fastened to the retaining part by means of screws (15, 16), and the screws (15, 16) form the pivot axes of the handbrake lever (7) and of the pivot lever (8).

5. A parking brake according to one or more of the preceding claims, **characterised in that** the retaining part (12) is fixed in a clip (13) which can be clamped on a frame tube (1a) .

6. A parking brake according to claim 5, **characterized in that** the fixing takes place by means of a frictional and interlocking connection.

## Revendications

1. Frein de stationnement, notamment pour un fauteuil roulant comportant un élément d'appui (10) articulé à une partie de support (12) au moyen d'un levier pivotant (8), qui par pivotement d'un levier de frein à main (7) peut être pivoté dans une position de stationnement dans laquelle l'élément d'appui (10) s'appuie en exerçant une force sur un pneu (2) et un élément exerçant une force de rappel est mis sous précontrainte, **caractérisé en ce que** l'élément exerçant une force de rappel est constitué par une partie élastiquement pliable (6) d'un couvercle de boîtier (5) pouvant être fixé à la partie de support (12).

2. Frein de stationnement selon la revendication 1, **caractérisé en ce que** la partie élastiquement pliable (6) s'appuie contre le levier pivotant (8).

3. Frein de stationnement selon la revendication 1 ou 2, **caractérisé en ce que** le couvercle de boîtier (5) est en matière synthétique et la partie pliable (6) est moulée par injection avec celui-ci.

4. Frein de stationnement selon l'une ou plusieurs des revendications précédentes, **caractérisé en ce que** le couvercle de boîtier (5) est fixé au moyen de vis (15, 16) à la partie de support et les vis (15, 16) constituent les axes de pivotement du levier de frein à main (7) et le levier pivotant (8).

5. Frein de stationnement selon l'une ou plusieurs des revendications précédentes, **caractérisé en ce que** la partie de support (12) est fixée dans un collier (13) pouvant être serré sur un tube (1a) du cadre.

6. Frein de stationnement selon la revendication 5, **caractérisé en ce que** la fixation est réalisée par coopération de force et de forme.
